# EUROPEAN PATENT SPECIFICATION

(11) **EP 0 999 631 B1**
(45) Date of publication and mention of the grant of the patent: **31.12.2008**
(21) Application number: 98203729.3
(22) Date of filing: 06.11.1998
(51) Int. Cl.: H02H 7/08

(54) **Device for the protection of an electric motor and related method**
Schutzvorrichtung für einen elektrischen Motor und entsprechendes Verfahren
Dispositif de protection pour moteur électrique et procédé associé

(43) Date of publication of application: 10.05.2000
(73) Proprietor: ABB Research Ltd., 8050 Zürich (CH)
(72) Inventor: Corbetta, Giuliano, 20110 Milano (IT); Manzoni, Ezio, 24030 Terno d'Isola (Bg) (IT)
(74) Representative: Giavarini, Francesco

(56) References cited:
- FR-A- 2 565 430
- GB-A- 2 294 827
- US-A- 5 657 193

## Description

The present invention relates to a device for the protection of an electric motor and related method; more particularly, the device according to the invention incorporates the functions of protection for the motor with those typical for the power supply line to which it is attached, in an arrangement which is compact in structure, optimised in function and extremely flexible in application.

The device according to the invention is particularly suitable for use with low voltage electric motors.

As is known, the configuration in which safety devices for low voltage electric motors are used generally provides for the simultaneous presence of a circuit-breaker and a contactor: the former is characterised by its capacity to withstand and interrupt high currents, but with a limited permitted number of operations; in the case of the latter on the other hand the number of allowed operations is practically unlimited, but the capacity to withstand and interrupt high currents is less. It follows that operation by either the circuit-breaker or the contactor will be required, depending upon the type of fault occurring in the motor or in the power line supplying it.

At the present state of the art such operation is governed by commands issued by protection devices which are specifically dedicated to the circuit-breaker and the contactor, and which operate independently of each other.

The fact of having two protection devices which operate in a manner which is not coordinated between them causes a poor flexibility in applications and an increase in construction costs because both must measure the currents present; in this way construction components are doubled and there is a consequent fall in the overall reliability of the protection system.

Another problem with protection systems of the known type, an example of which is described in the patent application GB 2 294 827, lies in the fact that when a motor fault occurs the protection device acts by fruitlessly attempting to open the contactor. Failure to open may be due to e.g. welding of the contactor contacts, and will cause damage to both the protection device and the motor itself .

In order to overcome this drawback one solution which has been adopted is to provide the contactor with suitable electronics to detect the lack of response and to send a corresponding signal to the protection device; however, at the current state of the art no direct methods for detecting lack of tripping of the contactor are known.

The main task of the present invention is to provide a device for the protection of an electric motor which incorporates the functions of protection of the motor with those typical of the power supply line to which it is connected so that operation of the circuit-breaker or contactor can be controlled according to the specific type of fault which has occurred.

As part of this task, an object of the present invention is to provide a device for the protection of an electric motor which is flexible in application and optimised in structure, making it possible in particular to reduce the components required, and thus construction costs.

Another object of the present invention is to provide a device for the protection of an electric motor which can be used to detect lack of operation of the contactor without using additional electronics on the contactor itself.

Yet a further object of the present invention is to provide a device for the protection of an electric motor which is capable of detecting lack of operation of the contactor or circuit-breaker, and thus to cause the protection system to act so as to avoid damage to the motor and the protection device itself.

A further but not the last object of the present invention is to provide a device for the protection of an electric motor which is highly reliable and relatively easy to manufacture at a competitive cost.

This task, together with these and other objects that shall emerge more clearly hereinafter, are achieved by a device for the protection of an electric motor connected to a power supply line according to what indicated in Claim 1 and in the relative dependent claims.

The above mentioned task, as well as the objects mentioned above and others as well, are also achieved by a method for the protection of an electric motor connected to a power supply line according to what claimed in claim 16 and in the relative dependent claims.

Further characteristics and advantages of the invention will emerge more clearly from the description of preferred but not exclusive embodiments of the device according to the invention which are illustrated by way of non-limiting examples in the accompanyings drawings, in which:
Figure 1 is an overall block diagram of the device according to the invention;
Figure 2 is a detailed block diagram of the processing and comparison means used in the device according to the invention;
Figure 3 is a detailed block diagram of a control and command logic unit used in the device according to the invention;
Figure 4 illustrates the trend in the feed current during a motor start-up transient,
Figure 5 illustrates a possible way of setting up the comparison means for protecting against the fault of a phase to phase short circuit.

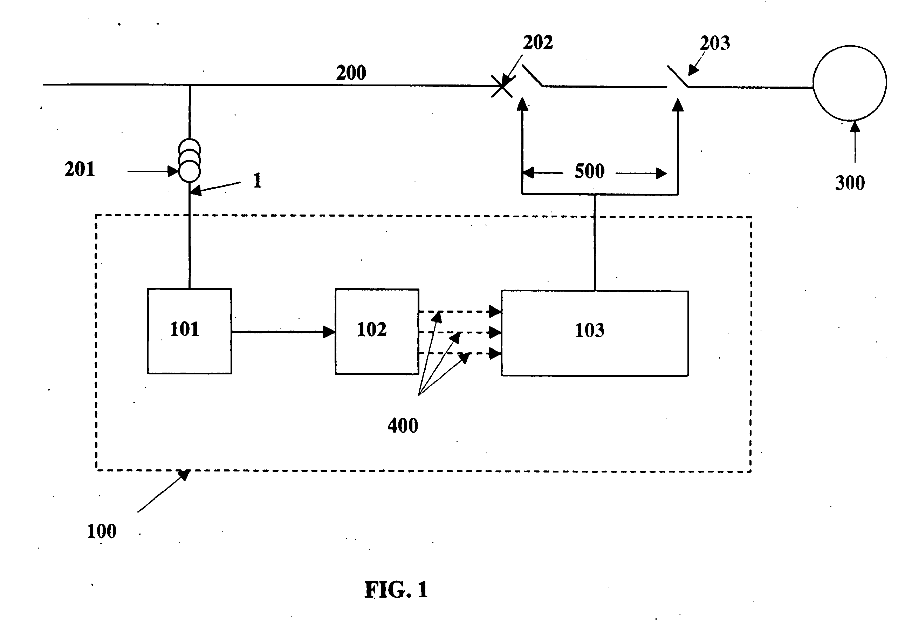

With reference to Figure 1, an electric motor 300 is connected to a feed line 200; suitable current sensors 201 which detect the motor feed currents and at least a circuit-breaker 202 and a contactor 203, whose operation is controlled by a command signal provided by the device 100 which will be described in detail hereinafter, are provided on line 200. Preferably the detection sensors comprise current transformers.

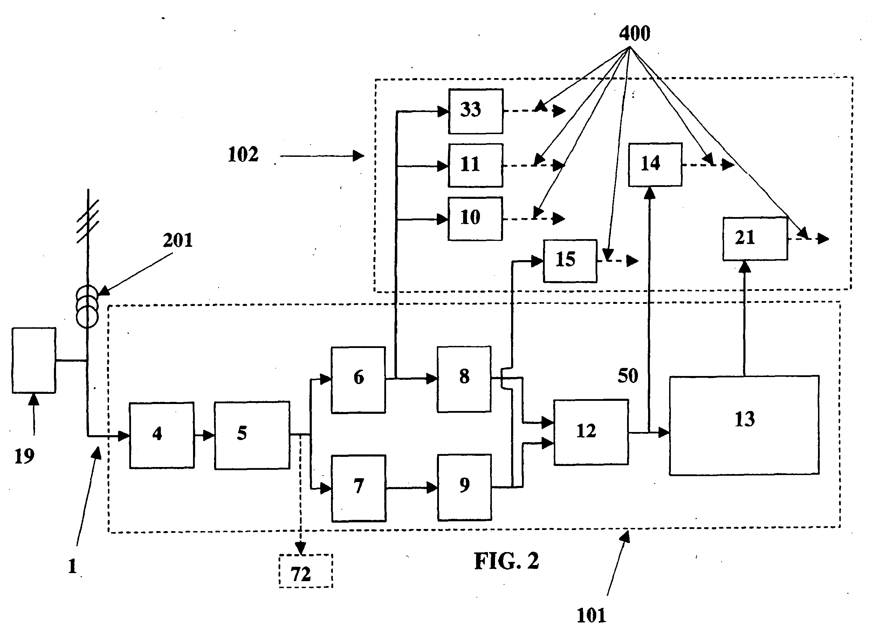

In particular, the device according to the invention 100 comprises processing means 101 which receive input analog signals indicating the motor feed currents from sensors 201 and output corresponding digital signals to comparison means 102. For simplicity of description, the analog signals provided by sensors 201 are shown together as a single signal 1 in the attached figures. Appropriately, as illustrated in Figure 2, the supply power provided by the current transformers is stored in a supply unit 19; in this way there is an amount of energy which can be utilised to power the device itself during periods when the motor feed is interrupted. This supply unit comprises one or more capacitors; alternatively other storing energy devices may be used provided that they are compatible with the purpose.

Comparison means 102 compare the digital signals received with predetermined threshold values and if at least one of the threshold conditions is not satisfied send an alarm signal 400 indicating a fault to a control and command logic unit 103; depending upon the type of alarm signal received, the logic unit 103 outputs a corresponding command signal selectively causing the operation of the circuit-breaker 202 or of the contactor 203, thus interrupting the motor feed.

As illustrated in detail in Figure 2, processing means 101 comprise conditioning means 4 which condition received input signals 1 so as to provide a correct input level to converter means 5; this converter means 5, which comprise e.g. known A/D converters, appropriately sample the signals received and convert them from analog to digital. The digital signals so obtained are then provided as an input to first calculating means 6 and second calculating means 7; in addition, the signals are sent to control means 72 of the unit 103 for the purpose which will be described in detail hereinafter.

In the embodiment of the device according to the invention, first calculating means 6 and second calculating means 7 calculate signals indicating for each feed current the squares of the root mean square value (I_{RMS})² and the square of the peak value (Iₚ)², respectively. The signals indicating the squares of the values (I_{RMS})² thus calculated are sent to first selection means 8, to first comparison means 10 and second comparison means 11; the signals indicating the squares of the peak values (Iₚ)² are sent to selection and compensating means 9.

First comparison means 10 compare the calculated signals indicating the square of the root mean square values (I_{RMS})² with a predetermined threshold value I_{pf} which depends on the configuration of the system in which the motor 300 is utilised; for example, this value may be equal to 0.4In, where In is the value of the rated current for the current transformers. In the device according to the invention this value In is equal to that of the circuit-breaker 202.

If one of the (I_{RMS})² values is below this threshold, means 10 operate a timing with a maximum time T₁, for example of the order of 4 seconds. If during this period of time the (I_{RMS})²value remains below the threshold, means 10 send an alarm signal 400 indicating a condition of loss of feeding phase/s of the motor to a control and command logic unit 103. This situation may also occur for two values of (I_{RMS})².

In turn, second comparison means 11 compare the signals indicating the squares of the root mean square value (I_{RMS})² with a threshold value I_{ac} which is also predetermined on the basis of system considerations, and when all the values are simultaneously below the threshold a timer is initialized for a predetermined time t₂. If this condition persists after time t₂ has elapsed, means 11 send an alarm signal 400 indicating a fault due to a no load condition to the logic unit 103.

In addition, first calculating means 6 calculate a vector sum of the digital signals indicating the currents 1, calculate the square of the root mean square value (I_{RMS})² of said summed signal, and send it to third comparison means 33. If the motor is operating correctly, the vector sum calculated by means 6 will give a zero value; if this is not the case, the signal indicating the (I_{RMS})² in input to comparison means 33 indicates the presence of an earth current and is compared with a predetermined threshold value I_{cc}. When the calculated signal is higher than the threshold, means 33 initialize a timer for a maximum time t₃, e.g. of the order of 100-800 ms. If after time t₃ has elapsed the condition of the signal being higher than the threshold persists, means 33 send an alarm signal 400 indicating a fault due to a condition of earth short circuit to the logic unit 103.

Selection and compensating means 9 compensate the signals indicating the squares of the peak values (Iₚ)² to take into account any saturation of the current transformers, and output a signal indicating the highest value of the calculated values of (Iₚ)² to second selection means 12 and fourth comparison means 15. Generally saturation of the current transformers occurs when feed current values are greater than Iₛₐₜ, where Iₛₐₜ = 6In.

Comparison means 15 compare the signal indicating the highest peak value (Iₚ)² received as an input with a predetermined threshold I_{pc}, and if it is higher than this threshold initialize a timer for a predetermined time t₄. If after time t₄ has elapsed the condition of the value being higher than the threshold persists, means 15 send an alarm signal 400 for a fault due to a condition of phase to phase short circuit to logic unit 103.

In addition to said signal indicating the highest peak value (Iₚ)², second selection means 12 also receive a signal indicating the highest value of (I_{RMS})² appropriately selected by first selection means 8.

Second selection means 12 compare the signals received as inputs with a predetermined limit value (Iₗᵢₘ) and select a signal indicating the highest value of (I_{RMS})² where (I_{RMS})²<(Iₗᵢₘ) or a signal indicating the highest value of (Iₚ)² where (I_{RMS})²>(Iₗᵢₘ); for example this limit may be equal to 6In.

The selected signal, indicated by reference number 50 in Figure 2, is then sent to programmable calculating means 13 and fifth comparison means 14.

Fifth comparison means 14 compare the selected signal 50 indicating the highest value of (I_{RMS})² or (Iₚ)² with a predetermined threshold I_{LR}, and if it exceeds that threshold initialize a timer for a predetermined time t₅, which can be varied between e.g. 1 and 10 seconds. If after time t₅ has elapsed the condition of the value exceeding the threshold persists, means 14 send an opening signal 400 indicating a fault due to the condition of locked rotor to the logic unit 103.

In turn, programmable calculating means 13 use the selected signal 50 received as an input and appropriate coefficients previously recorded in tables to calculate the state variables of a thermal model whose state equations simulate the trend of the temperatures of copper T_{cu} and iron T_{fe} in the motor 300.

In a preferred embodiment of the device according to the invention, the signal indicating the calculated value of T_{cu} is sent to sixth comparison means 21 and compared with a predetermined threshold temperature value. Said threshold value may be established on the basis of a formula of the type Tsg1 = β (Iₘᵢₙ)² where β is a coefficient which relates the value of the rated current to the rated value of T_{cu}, which is the normal operating temperature, and Iₘᵢₙ is a minimum value for the current determined by the designer on the basis of international specifications and in general ranges between 1.05 and 1.2I₁, where I₁ is equal to the value of the rated feed current for the motor.

When the calculated value of T_{cu} exceeds the predetermined threshold, means 21 send an alarm signal 400 for a fault due to a condition of thermal overload in the motor to the logic unit 103. In this case the device intervenes after a time tx whose value depends on the protection class for the motor and previous values of the current while the motor has been in operation; in particular, protection classes are defined in accordance with the specifications of international standard IEC 947-4-1.

Alternatively, and in a equivalent way, comparison with predetermined threshold values may be performed by using the state variable T_{fe}, or both the variables, or again by calculating other variables indicative of motor temperatures.

A further advantageous feature of the device of protection according to the invention lies in the fact that it comprises suitable temperature sensors, not shown in the figures, which can directly detect the temperature of the motor and perform a further thermal protection function. In this case the sensors comprise a thermocouple, e.g. of the PTC type, which can be housed directly in the windings of motor 300. The thermocouple incorporates a resistance whose value depends significantly on the motor temperature; if the measured value of the temperature exceeds a threshold value, which depends on the type of thermocouple used, the thermocouple emits a signal to initialize a timer located in interface means appropriately provided in the device and not illustrated in the figures. After a predetermined time t₅, if the value of the motor temperature remains above the threshold the interface means send an alarm signal for a fault due to a condition of over temperature in the motor to the logic unit 103.

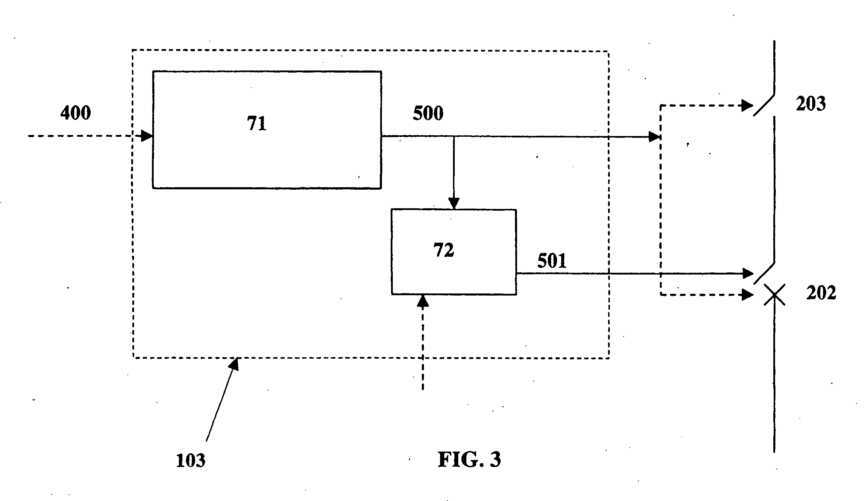

The alarm signals 400 emitted from time to time by the comparison means thus reach the opening logic unit 103; in particular as illustrated in detail in Figure 3, signals 400 are provided as an input to selection and control means 71 which compare them with a predetermined setting and recognise the stape of fault present on the basis of the comparison.

On the basis of this comparison means 21 generate a command signal 500 which selectively causes the opening of the circuit breaker 202 or of the contactor 203 depending upon the fault recognised.

In this way there is the great advantage to have only one protection device which incorporates the functions of protecting the motor with those typical for the feed line to which it is connected; in fact, as previously described, the device according to the invention is capable of protecting the electric motor for phase to phase short circuit faults, earth short circuit faults, no-load faults, locked rotor faults, loss of phase faults, thermal overload faults, and over temperature faults, in an arrangement which is compact in structure, optimised in functions and extremely flexible in applications.

Another significant advantage of the device according to the invention lies in the fact that logic unit 103 is able to recognise that the circuit-breaker or contactor has failed to operate and to cause a backup operation so as to ensure that the motor feed is interrupted in any event. In fact, as illustrated in Figure 3, control signal 500 for opening the contactor or the circuit-breaker emitted by means 71 is also sent to control means 72. For example, assuming that selected signal 500 is to open the contactor, when signal 500 is received by control means 72 a timer is started for a predetermined time tₘₐₓ, e.g. tₘₐₓ=50ms. At predetermined times less than tₘₐₓ, control means 72 check the zero current condition for each of the three supply phases of the motor on the basis of the signals received from means 5; if the values (Iₚ)² are zero for t<tₘₐₓ the timer is reset because the contactor has opened correctly. If on the other hand the (Iₚ)² values are not zero for t>tₘₐₓ, control means 72 send a signal 501 to open the circuit-breaker. At the same time the timer is reinitialised to a value t'ₘₐₓ>tₘₐₓ, where both t'ₘₐₓ and tₘₐₓ are determined in relation to the characteristics of the circuit breaker and of the contactor; for example it may be that t'ₘₐₓ=1 second. Checks are then performed on the peak current values in the same way as described previously and if still ≠0 for t >t'ₘₐₓ a further command 501 for opening the circuit breaker is generated. If the first response command relates to opening of the circuit-breaker, everything previously described applies in a wholly similar way and the back-up action is applied to the circuit-breaker itself.

In this way the device is able to detect failures of the contactor to operate and to replace it by the circuit-breaker, thus avoiding damage to the motor and the protection system associated with it without the use of additional electronics on the contactor. In addition, even when the circuit breaker fails to operate, the device is able to act upon it again and send a further command signal.

It should be underlined that when the circuit-breaker or the contactor have operated correctly, causing interruption of the supply to the motor, the logic unit 103 is, like other parts of the device, able to operate on account of the energy provided from the supply unit 19.

Another feature which needs to be considered resides in the fact that the backup protection function designed in this way can also be used where device for measuring the root mean square values of the currents are used with delays which make it impossible to detect the zero current within the predetermined time through the measurements themselves. In such situations the condition that the current is actually zero (I = 0) can be checked but the measurement yields a value of I≠0. In order to overcome this drawback detection may be performed through specific processing based directly on samples of the output from the A/D converter means which processe the signals obtained from the motor feed currents.

In the case of devices which operate using the subsampling technique, e.g. low cost microcontrollers, the processing of A/D samples have the problem that a zero value for the current is incorrectly detected when the value of the current is close to the zero current threshold. To overcome this problem two different scales can be used for the current signals and all six signals from the three phases can be sampled together in a sequence which as a result of the mutual phase displacement between the phases of the signals in question makes it possible to minimise the possibility of error when detecting the zero current condition.

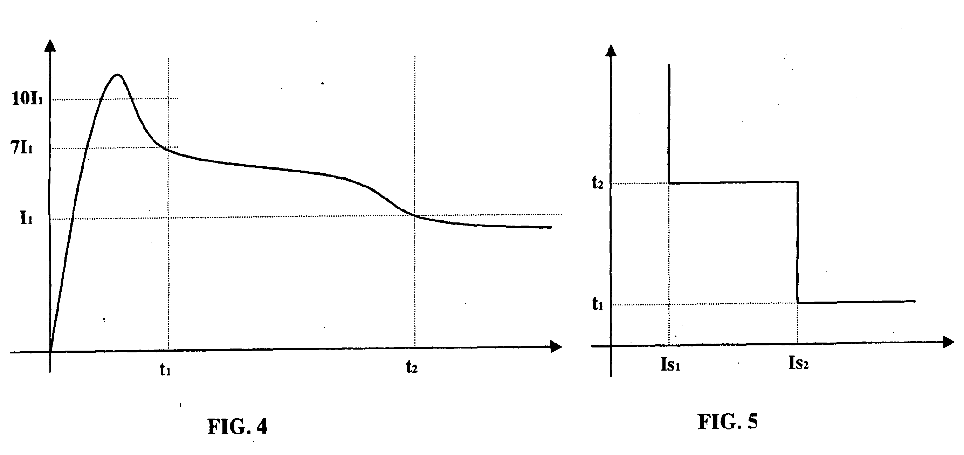

A further and important innovative feature of the device according to the invention resides in the possibility of coordinating the functions of protection against phase-to-phase short circuit, earth short circuit and locked rotor during the motor start-up transient. As illustrated in Figure 4, the trend of the current during the start-up transient initially shows a peak which can achieve very high values, even more than ten times greater than the rated supply current for the motor, I₁, for a short time t1, e.g. 20 ms; there is then a start-up current of the order of e.g. 7I₁ for a time t₂, and finally the rated value I₁ is achieved. In this situation comparison means 15 can have set threshold current values with response times less than those of the initial peak in the transient, as a result of which the protection device may respond inappropriately. Similarly, comparison means 14, which check for any locked rotor condition, may have preset threshold limits with response times shorter than those occurring during the motor start-up phase and cause the device to operate inappropriately.

In order to avoid these drawbacks two threshold current values Iₛ₁ and Iₛ₂, where Iₛ₂>Iₛ₁, are set for protection against phase-to-phase short circuit in protection means 15; for example, Iₛ₁ is equal to the phase-to-phase short circuit threshold during normal operation of the motor and Iₛ₂=1.5Iₛ₁. When the motor is started-up the highest peak value (Iₚ)² calculated in the same way as described above is compared with the thresholds Iₛ₁ and Iₛ₂. If the highest value (Iₚ)² is higher than Iₛ₂ the timer of means 15 is incremented to t=t₇, e.g. t₇=10ms; after time t₇, if this detected condition persists, unit 103 intervenes in the same way as described above. If however the highest peak (Iₚ)² lies between Iₛ₁ and Iₛ₂, the timer is incremented to t=t_{7'}. where t_{7'}>t₇ (e.g. t_{7'}=25ms) and the unit 103 only intervenes after this time. In this way it can be established whether the current passing through the motor is due to a real short-circuit, in which case the current is very high for long periods, or is an inrush-current which reaches high values for only a short time and depends on the nature of the start-up transient itself. At the same time, after measurement of feed currents I, if I > 0 for the first time, and if it is in fact a motor start-up phase, a suitable logic signal emitted by the unit 103 disables the protection means 14 for a time equal to that tx set in the protection means 21, which become those active in these circumstances. Since means 21 have preset tripping times indicative of the expected start-up transient, generally greater than those in means 14, inappropriate operations of the protection caused by erroneous detection of a locked rotor fault is avoided. When the time tₓ has elapsed, during which time the means 14 are disabled, logic unit 103 re-establishes normal operating conditions and the device can operate as described previously. If necessary, and in a functionally similar way, protection means 33 for the condition of earth short circuit in the device according to the invention can also be disabled; this disabling can be applied for example for a few milliseconds.

Yet a further advantage of the device according to the invention resides in the fact that as a result of its construction it can be connected to a field bus to obtain measurements of the circulating currents and events occurring in the protection device itself, e.g. the opening of a circuit-breaker or contactor caused by a particular fault; in this way the settings of the protection device can easily be modified. The settings made through the field bus can be stored permanently in a memory of the non-volatile type, e.g. of the EEPROM type, not shown in the figures, and can therefore even be used when the connection to the field bus is not active. This results in a very high flexibility in use, with the possibility of setting required threshold levels and operation times.

## Claims

1. Device (100) for the protection of an electric motor (300) connected to a power supply line (200) said line (200) being provided with sensors (201) for detecting the currents supplying the motor (300) and at least a circuit-breaker (202) and a contactor (203), **characterised in that** it comprises:
- processing means (101) which receive analog signals indicating the motor feed currents from the said sensors (201) and output corresponding digital signals to comparison means (102), the said comparison means comparing the digital signals received with predetermined threshold values, wherein the processing means (101) comprise conditioning means (4) which condition the said analog signals received as an input and send them to converter means (5) which convert them into corresponding digital signals, and comprise first calculating means (6) which receive the said digital signals from converter means (5) and output signals indicating the squares of the root mean square value (IRMS²) to first selection device (8), to first comparison means (10), to second comparison means (11) and to third comparison means (33),
wherein the said first comparison means (10) compare the said signals indicating the squares of the root mean square values (IRMS²) with a first predetermined threshold value (Ipf) and if one of the said values is below the said first threshold for a first predetermined time (t1) send an alarm signal for loss of phase/s to a control and command logic unit (103),
wherein the said second comparison means (11) compare the said signals indicating the squares of the root mean square values (IRMS²) with a second predetermined threshold value (Iac), and if the said values are all simultaneously below this second threshold for a second predetermined time interval (t2) send an alarm signal for a no load condition to the control and command logic unit (103), and
wherein the said third comparison means (33) compare the said signals indicating the squares of the root mean square value (IRMS²) with a third predetermined threshold value (Icc) and if they are higher than this third threshold for a third predetermined time (t3) send an alarm signal for earth short circuit to the control and command logic unit (103).
- the control and command logic unit (103) which receives an alarm signal indicating a fault from the comparison means and outputs a corresponding command signal selectively causing operation of the circuit-breaker (202) or of the contactor (203) depending upon the type of fault which has occurred.

2. Device (100) for the protection of an electric motor (300), according to claim 1, **characterised in that** processing means (101) comprise second calculating means (7) which receive the said digital signals from the converter means (5) and provide signals indicating the squares of the peak values (Ip²) of the motor feed currents to selection and compensating means (9).

3. Device (100) for the protection of an electric motor (300), according to claim 2, **characterised in that** selection and compensating means (9) compensate the signals indicating the squares of the peak values (Ip²) of the feed currents and output a signal indicating the highest value of the squares of the peak values (Iₚ²) to second selection means (12) and to fourth comparison means (15).

4. Device (100) for the protection of an electric motor (300), according to claim 3, **characterised in that** the said fourth comparison means (15) compare the said signal indicating the highest value of the squares of the peak values (Iₚ²) with a predetermined threshold value (Ipc) and if it is higher than the predetermined threshold (Ipc) for a predetermined time (t4) send an alarm signal for a phase-to-phase short circuit condition to the control and command logic unit (103).

5. Device (100) for the protection of an electric motor (300), according to claim 1 **characterised in that** the first selection means (8) select the signal indicating the highest value of the squares of the rms values (I_{RMS}²) and send it to said second selection means (12).

6. Device (100) or the protection of an electric motor (300), according to claim 5, **characterised in that** second selection means (12) send the signal indicating the highest value of the squares of the rms values (I_{RMS}²) to programmable calculation means (13) and fifth comparison means (14) when the squares of the rms values (I_{RMS}²) < Ilim, Ilim being a predetermined limit value, or the signal H indicating the highest value of the squares of the peak values (Iₚ²) when the squares of the rms values (I_{RMS}²) > Ilim.

7. Device (100) for the protection of an electric motor (300), according to claim 6, **characterised in that** said fifth comparison means (14) compare the selected signal indicating the highest value of the squares of the rms values (I_{RMS}²) or the squares of the peak values (Iₚ²) with a predetermined threshold value (ILR) and when it is higher than the threshold (ILR) for a predetermined time (t5) send an alarm signal for locked motor to the control and command logic unit (103).

8. Device (100) for the protection of an electric motor (300), according to claim 6, **characterised in that** programmable calculating means (13) calculate indicative values of the motor temperatures on the basis of the selected signal indicating the highest value of the squares of the peak values (Iₚ²) or the squares of the rms values (I_{RMS}²) and output signals corresponding to the said values indicating the motor temperatures to sixth comparison means (21).

9. Device (100) for the protection of an electric motor (300), according to claim 8 **characterised in that** said sixth comparison means (21) compare the said signals indicating motor temperatures with a predetermined threshold value (Tsg1) and if they are higher than said predetermined threshold (Tsg1) send an alarm signal for a thermal overload condition to the control and command logic unit (103).

10. Device for the protection of an electric motor (300), according to one or more of the previous claims **characterised in that** it comprises a motor temperature sensor which detects the motor temperature and if it exceeds a predetermined threshold send an alarm signal for over temperature to the control and command logic unit (103).

11. Device (100) for the protection of an electric motor (300), according to one or more of the previous claims **characterised in that** the control and command logic unit (103) comprise selection and command means (71) which receive an alarm signal indicating a fault from the comparison means (10) and provide a corresponding command signal (50) which causes selective operations of the circuit-breaker (202) or of the contactor (203), the said command signal (500) also being provided to control means (72).

12. Device (100) for the protection of an electric motor (300), according to claim 11 **characterised in that** said control means (72) check for a zero feed current condition at predetermined intervals and if this condition is not satisfied send further command signals (501) to the circuit-breaker (202).

13. Device (100) for the protection of an electric motor (300), according to one or more of the previous claims **characterised in that** in an initial motor start-up phase, the control and command logic unit (103) disables comparison means (14) for a predetermined time interval tx, assigns two peak current threshold values Is1, Is2, where Is2 > Is1, and two corresponding operation times t7 and t7', where t7' > t7, to protection means (15), resetting the initial threshold values after time tx, the said time tx being equal to that set for operation of the device (100) in the presence of an alarm due to a thermal overload condition in the motor (300).

14. Device (100) for the protection of an electric motor (300), according to one or more of the previous claims **characterised in that** it comprises a power supply unit (19) capable of providing the electrical power necessary for operation of the device during times when the motor feed is interrupted, the said power supply unit comprising at least one capacitor.

15. Device (100) for the protection of an electric motor (300), according to one or more of the previous claims **characterised in that** it can be connected to a field bus to obtain measurements of the motor feed current and information on the type of fault occurring.

16. Method for the protection of an electric motor (300) connected to a power supply line (200), said line (200) being provided with sensors (201) for detecting the currents supplying the motor (300) and at least a circuit-breaker (202) and a contactor (203), **characterised in that** it comprises the following steps:
a) acquiring analog signals indicating the motor feed current and calculating digital signals corresponding to the said analog signals, said step a) comprising:
- conditioning the analog signals received as an input and converting them to corresponding digital signals;
- calculating digital signals indicating the squares of the root mean square values (IRMS²) and the squares of the peak values (Ip²) of the motor feed currents;
b) comparing the said digital signals with predetermined threshold values, and, if at least one of the threshold values is not satisfied, sending an alarm signal indicating a fault to an opening logic unit (103), said step b) comprising:
- comparing the said digital signals indicating the squares of the root mean square values (IRMS²) with a first predetermined threshold value (Ipf) and if one of the said values is below the said threshold (Ipf) for a first predetermined time (t1) sending an alarm signal for the loss of phase/s;
- comparing the said digital signals indicating the squares of the root mean square values (IRMS²) with a second predetermined threshold value (Iac), and if these values are all simultaneously below the said threshold (Iac) for a second predetermined time (t2), sending an alarm signal for a no load condition;
- comparing the said digital signals indicating the squares of the root mean square values (IRMS²) with a third predetermined threshold value (Icc) and if they are higher than the said threshold (Icc) for a third predetermined time (t3) sending an alarm signal for an earth short circuit condition;
c) sending a control signal which selectively causes operation of the circuit breaker (202) or of the contactor (203) depending on the type of fault which has occurred.

17. Method for the protection of an electric motor (300), according to claim 16, **characterised in that** the said step a) also comprises:
- selecting a signal indicating the highest value of the squares of the rms values (I_{RMS}²);
- compensating the signals indicating the squares of the peak values (Iₚ²) and selecting the signal indicating the highest value of the squares of the peak values (Iₚ²);
- selecting the signal indicating the highest value of the squares of the rms values (I_{RMS}²) when the squares of the rms values (I_{RMS}²) < Ilim, Ilim being a prefixed limit value, or the signal indicating the highest value of the squares of the peak values (Iₚ²) when the squares of the rms values (I_{RMS}²) > Ilim;
- calculating signals indicating values of the motor temperatures on the basis of the selected signal indicating the highest value of the squares of the rms values (I_{RMS}²) or the squares of the peak values (Iₚ²).

18. Method for the protection of an electric motor (300), according to claim 17 **characterised in that** the said step b) also comprises:
- comparing the said signal indicating the highest value of the squares of the peak values (Iₚ²) with a first predetermined threshold value (Ipc) and if it is higher than the first predetermined threshold (Ipc) for a predetermined time (t4) sending an alarm signal for a phase-to-phase short circuit condition;
- comparing the selected signal indicating the highest value of the squares of the rms values (I_{RMS}²) or the squares of the peak values (Iₚ²) with a second predetermined threshold value (ILR) and when this is higher than the second threshold (ILR) for a fifth predetermined time (t5) sending an alarm signal for a locked rotor condition;
- comparing the said signals indicating the motor temperatures with a third predetermined threshold value (Tsg1) and if it is higher than the third predetermined threshold (Tsg1) sending an alarm signal for a thermal overload condition.

19. Method for the protection of an electric motor (300), according to claim 16 **characterised in that** the said step c) comprises:
- sending a control signal which causes selective operation of the circuit-breaker (202) or of the contactor (203),
- checking at predetermined intervals that there is a zero feed current condition and when this condition is not satisfied sending a further command signal to the circuit-breaker (202).

20. Method for the protection of an electric motor (300), according to claim 16 , **characterised in that** during an initial motor start-up transient comprises the steps which consist in:
- disabling the locked rotor protection function for a time tx;
- assigning two threshold values Is1, Is2, where Is2 > Is1 and two corresponding operation times t7, t7', where t7 > t7' to the phase-to-phase short circuit protection function;
- re-establishing normal operating conditions after time tx, the said time tx being equal to that set for operation of the protection system in the event of an alarm due to a condition of thermal overload of the motor.

## Patentansprüche

1. Vorrichtung (100) für den Schutz eines Elektromotors (300), der mit einer Energieversorgungsleitung (200) verbunden ist, wobei die Leitung (200) mit Sensoren (201) versehen ist zum Erfassen der Ströme, die den Motor (300) und zumindest einen Leistungsschutzschalter (202) und einen Kontaktgeber (203) versorgen, **dadurch gekennzeichnet,dass** die Vorrichtung aufweist:
- eine Verarbeitungseinrichtung (101), die analoge Signale, die die Motorzuführströme anzeigen, von den Sensoren (201) empfängt und entsprechende digitale Signale an eine Vergleichseinrichtung (102) ausgibt, wobei die Vergleichseinrichtung die empfangenen digitalen Signale mit vorbestimmten Schwellwerten vergleicht, wobei die Verarbeitungseinrichtung (101) eine Konditionierungseinrichtung (4) aufweist, die die empfangenen analogen Signale als eine Eingabe konditioniert und an die Wandlereinrichtung (5) sendet, die diese in entsprechende digitale Signale umwandelt, und eine erste Berechnungseinrichtung (6) aufweist, die die digitalen Signale von der Wandlereinrichtung(5) empfängt und Signale, die die Quadrate des Quadratmittelwerts (IRMS²) anzeigt, an eine erste Auswählvorrichtung (8), eine erste Vergleichseinrichtung (10), eine zweite Vergleichseinrichtung (11) und an eine dritte Vergleichseinrichtung (33) ausgibt,
- wobei die erste Vergleichseinrichtung (10) die Signale, die die Quadrate der Quadratmittelwerte (IRMS²) anzeigen, mit einem ersten vorbestimmten Schwellwert (Ipf) vergleicht, und wenn einer der Werte die erste Schwelle für eine erste vorbestimmte Zeit (t1) unterschreitet, ein Alarmsignal für einen Verlust einer / von Phase/n an eine Steuerungs- eine Befehlslogikeinheit (103) sendet,
- wobei die zweite Vergleichseinrichtung (11) die Signale, die die Quadrate der Quadratmittelwerte (IRMS²) anzeigen, mit einem zweiten vorbestimmten Schwellwert (Iac) vergleicht, und wenn die Werte allesamt gleichzeitig diese zweite Schwelle für ein zweites vorbestimmtes Zeitintervall (t2) unterschreiten, ein Alarmsignal für einen Nichtlastzustand an die Steuerungs- und Befehlslogikeinheit (103) sendet, und
- wobei die dritte Vergleichseinrichtung (33) die Signale, die die Quadrate der Quadratmittelwerte (IRMS²) anzeigen, mit einem dritten vorbestimmten Schwellwert (Icc) vergleicht, und wenn sie diese dritte Schwelle für eine dritte vorbestimmte Zeit (t3) überschreiten, ein Alarmsignal für einen jeweiligen Massekurzschluss an die Steuerungs- und Befehlslogikeinheit (103) sendet, und
- die Steuerungs- und Befehlslogikeinheit (103), die ein Alarmsignal empfängt, das einen Fehler von der Vergleichseinrichtung anzeigt und ein entsprechendes Befehlssignal ausgibt, wodurch ein Betrieb des Lastschutzschalters (202) oder des Kontaktgebers (203) abhängig von der Art des aufgetretenen Fehlers selektiv bewirkt.

2. Vorrichtung (100) für den Schutz eines Elektromotors (300) nach Anspruch 1, **dadurch gekennzeichnet, dass** eine Verarbeitungseinrichtung (101) eine zweite Berechnungseinrichtung (7) aufweist, die die digitalen Signal von der Wandlereinrichtung (5) empfängt und Signale, die die Quadrate der Spitzenwerte (IP²) der Motorzuführströme anzeigen, an die Auswähl- und Kompensationseinrichtung (9) liefert.

3. Vorrichtung (100) für den Schutz eines Elektromotors (300) nach Anspruch 2, **dadurch gekennzeichnet, dass** die Auswähl- und Kompensationseinrichtung (9) die Signale, die die Quadrate der Spitzenwerte (Ip²) der Zuführströme anzeigen, kompensiert und ein Signal, das den höchsten Wert der Quadrate der Spitzenwerte (Ip²) anzeigt, an eine zweite Auswähleinrichtung (12) und eine vierte Vergleichseinrichtung (15) ausgibt.

4. Vorrichtung (100) für den Schutz eines Elektromotors (300) nach Anspruch 3, **dadurch gekennzeichnet, dass** die vierte Vergleichseinrichtung (15) das Signal, das den höchsten Wert der Quadrate der Spitzenwerte (Ip²) anzeigt, mit einem vorbestimmten Schwellwert (Ipc) vergleicht, und wenn die vorbestimmte Schwelle (Ipc) für eine vorbestimmte Zeit (t4) überschritten wird, ein Alarmsignal für eine Phase-zu-Phase-Kurzschlussbedingung an die Steuerungs- und Befehlslogikeinheit (103) sendet.

5. Vorrichtung (100) für den Schutz eines Elektromotors (300) nach Anspruch 1, **dadurch gekennzeichnet, dass** die erste Auswähleinrichtung (8) das Signal, das den höchsten Wert der Quadrate der Quadratmittelwerte (I_{RMS}²) anzeigt, auswählt und dieses an die zweite Auswähleinrichtung (12) sendet.

6. Vorrichtung (100) für den Schutz eines Elektromotors (300) nach Anspruch 5, **dadurch gekennzeichnet, dass** eine zweite Auswähleinrichtung (12) das Signal, das den höchsten Wert der Quadrate der Quadratmittelwerte (I_{RMS}²) anzeigt, an eine programmierbare Berechnungseinrichtung (13) und eine fünfte Vergleichseinrichtung (14) sendet, wenn die Quadrate der Quadratmittelwerte (I_{RMS}²) < Ilim, wobei Ilim ein vorbestimmter Grenzwert ist, oder das Signal, das den höchsten Wert der Quadrate der Spitzenwerte (Ip²) anzeigt, wenn die Quadrate der Quadratmittelwerte (I_{RMS}²) > Ilim.

7. Vorrichtung (100) für den Schutz eines Elektromotors (300) nach Anspruch 6, **dadurch gekennzeichnet, dass** die fünfte Vergleichseinrichtung (14) das ausgewählte Signal, das den höchsten Wert der Quadrate der Quadratmittelwerte (I_{RMS}²) oder der Quadrate der Spitzenwerte (Ip²) anzeigt, mit einem vorbestimmten Schwellwert (ILR) vergleicht und, wenn die Schwelle (ILR) für eine vorbestimmte Zeit (t5) überschritten wird, ein Alarmsignal für einen blockierten Motor an die Steuerungs- und Befehlslogikeinheit (103) sendet.

8. Vorrichtung (100) für den Schutz eine Elektromotors (300) nach Anspruch 6, **dadurch gekennzeichnet, dass** eine programmierbare Berechnungseinrichtung (13) indikative Werte der Motortemperaturen auf Basis des ausgewählten Signals berechnet, das den höchsten Wert der der Quadrate der Quadratmittelwerte (I_{RMS}²) oder der Quadrate der Spitzenwerte (Ip²) anzeigt, und Signale, die den Werten entsprechen, die die Motortemperaturen anzeigen, an die sechste Vergleichseinrichtung (21) ausgibt.

9. Vorrichtung (100) für den Schutz eines Elektromotors (300) nach Anspruch 8, **dadurch gekennzeichnet, dass** die sechste Vergleichseinrichtung (21) die Signale, die Motortemperaturen anzeigen, mit einem vorbestimmten Schwellwert (Tsgl) vergleicht, und, wenn die vorbestimmte Schwelle (Tsgl) überschritten wird, ein Alarmsignal für eine thermische Überlastbedingung an die Steuerungs- und Befehlslogikeinheit (103) sendet.

10. Vorrichtung (100) für den Schutz eines Elektromotors (300) nach einem oder mehreren der vorhergehenden Ansprüche, **dadurch gekennzeichnet, dass** sie einen Motortemperatursensor aufweist, der die Motortemperatur erfasst, und, wenn eine vorbestimmte Schwelle überschritten wird, ein Alarmsignal für eine Übertemperatur an die Steuerungs- und Befehlslogikeinheit (103) sendet.

11. Vorrichtung (100) für den Schutz eines Elektromotors (300) nach einem oder mehreren der vorhergehenden Ansprüche, **dadurch gekennzeichnet, dass** die Steuerungs- und Befehlslogikeinheit (103) eine Auswähl- und Befehlseinrichtung (71) aufweist, die ein Alarmsignal empfängt, das einen Fehler von der Vergleichseinrichtung (10) anzeigt, und ein entsprechendes Befehlssignal (50) bereitstellt, das selektive Betriebsabläufe des Leistungsschutzschalters (202) oder des Kontaktgebers (203) bewirkt, wobei das Befehlssignal (500) ebenfalls einer Steuereinrichtung (72) bereitgestellt wird.

12. Vorrichtung (100) für den Schutz eines Elektromotors (300) nach Anspruch 11, **dadurch gekennzeichnet, dass** die Steuereinrichtung (72) eine Null-Zuführstrombedingung in vorbestimmten Intervallen prüft, und, wenn diese Bedingung nicht erfüllt wird, weitere Befehlssignale (501) an den Leistungsschutzschalter (202) sendet.

13. Vorrichtung (100) für den Schutz eines Elektromotors (300) nach einem oder mehreren der vorhergehenden Ansprüche, **dadurch gekennzeichnet, dass** in einer anfänglichen Motorinbetriebnahmephase die Steuerungs- und Befehlslogikeinheit (103) eine Vergleichseinrichtung (14) für ein vorbestimmtes Zeitintervall tx sperrt, zwei Spitzenstrom-Schwellwerte Is1, Is2, wobei Is2 > Is1 und zwei entsprechende Betriebszeiten t7 und t7', wobei t7' > t7, der Schutzeinrichtung (15) zuordnet, wobei die anfänglichen Schwellwerte nach einer Zeit tx zurückgesetzt werden, wobei die Zeit tx gleich der ist, die für einen Betrieb der Vorrichtung (100) bei Vorhandensein eines Alarms aufgrund einer thermischen Überlastbedingung im Motor (300) eingestellt wird.

14. Vorrichtung (100) für den Schutz eines Elektromotors (300) nach einem oder mehreren der vorhergehenden Ansprüche, **dadurch gekennzeichnet, dass** sie eine Energieversorgungseinheit (19) aufweist, die in der Lage ist, die für den Betrieb der Vorrichtung erforderliche elektrische Leistung während der Zeit bereitzustellen, wenn die Motorstromzuführung unterbrochen ist, wobei die Energieversorgungseinheit zumindest einen Kondensator aufweist.

15. Vorrichtung (100) für den Schutz eines Elektromotors (300) nach einem oder mehreren der vorhergehenden Ansprüche, **dadurch gekennzeichnet, dass** sie mit einem Feldbus verbunden werden kann, um Messungen des Motorzuführstroms und Informationen über die Art des auftretenden Fehlers zu erhalten.

16. Verfahren für den Schutz eines Elektromotors (300), der mit einer Energieversorgungsleitung (200) verbunden ist, wobei die Leitung (200) mit Sensoren (201) versehen ist zum Erfassen der Ströme, die den Motor (300) und zumindest einen Leistungsschutzschalter (202) und einen Kontaktgeber (203) versorgen, **dadurch gekennzeichnet, dass** das Verfahren folgende Schritte beinhaltet:
a) Erhalten von analogen Signalen, die den Motorzuführungsstrom anzeigen, und Berechnen digitaler Signale, die den analogen Signalen entsprechen, wobei Schritt a) beinhaltet:
- Konditionieren der analogen Signale, die als Eingangssignale empfangen werden, und Umwandeln derselben in entsprechende digitale Signale;
- Berechnen digitaler Signale, die die Quadrate der Quadratmittelwerte (I_{RMS}²) und der Quadrate der Spitzenwerte (Ip²) der Motorzuführströme anzeigen;
b) Vergleichen der digitalen Signale mit vorbestimmten Schwellwerten, und, wenn zumindest einer der Schwellwerte nicht erfüllt wird, Senden eines Alarmsignals, das einen Fehler anzeigt, an eine Öffnungslogik (103), wobei der Schritt (b) aufweist:
- Vergleichen der digitalen Signale, die die der Quadrate der Quadratmittelwerte (I_{RMS}²) anzeigen, mit einem ersten vorbestimmten Schwellwert (Ipf), und, wenn einer der Werte den Schwellwert (Ipf) für eine erste vorbestimmte Zeit (t1) unterschreitet, Senden eines Alarmsignals für den Verlust einer / von Phase/n;
- Vergleichen der digitalen Signale, die die der Quadrate der Quadratmittelwerte (I_{RMS}²) anzeigen, mit einem zweiten vorbestimmten Schwellwert (Iac), und, wenn diese Werte allesamt gleichzeitig den Schwellwert (Iac) für eine zweite vorbestimmte Zeit (t2) unterschreiten, Senden eines Alarmsignals für eine Nichtlastbedingung;
- Vergleichen der digitalen Signale, die die Quadrate der Quadratmittelwerte (I_{RMS}²) anzeigen, mit einem dritten vorbestimmten Schwellwert (Icc), und, wenn sie die Schwelle (Icc) für eine dritte vorbestimmte Zeit (t3) überschreiten, Senden eines Alarmsignals für eine Massekurzschlussbedingung;
c) Senden eines Steuersignals, das selektiv einen Betrieb des Leistungsschutzschalters (202) oder des Kontaktgebers (203) abhängig von der Art des aufgetretenen Fehlers bewirkt.

17. Verfahren für den Schutz eines Elektromotors (300) nach Anspruch 16, **dadurch gekennzeichnet, das** der Schritt a) zudem beinhaltet:
- Auswählen eines Signals, das den höchsten Wert der Quadrate der Quadratmittelwerte (I_{RMS}²) anzeigt;
- Kompensieren der Signale, die die Quadrate der Spitzenwerte (Ip²) anzeigen, und Auswählen des Signals, das den höchsten Wert der Quadrate der Spitzenwerte (Ip²) anzeigt;
- Auswählen des Signals, das den höchsten Wert der Quadrate der Quadratmittelwerte (I_{RMS}²) anzeigt, wenn die Quadrate der Quadratmittelwerte (I_{RMS}²) < Ilim, wobei Ilim in zuvor festgelegter Grenzwert ist, oder des Signals, das den höchsten Wert der Quadrate der der Spitzenwerte (Ip²) anzeigt, wenn die Quadrate der Quadratmittelwerte (I_{RMS}²) > Ilim;
- Berechnen der Signale, die die Werte der Motortemperaturen anzeigen, auf Basis des ausgewählten Signals, das den höchsten Wert der Quadrate der Quadratmittelwerte (I_{RMS}²) oder der Quadrate der Spitzenwerte (Ip²) anzeigt.

18. Verfahren für den Schutz eines Elektromotors (300) nach Anspruch 17, **dadurch gekennzeichnet, dass** der Schritt b) zudem beinhaltet:
- Vergleichen des Signals, das den höchsten Wert der Quadrate der Spitzenwerte (Ip²) anzeigt, mit einem ersten vorbestimmten Schwellwert (Ipc) und, wenn dieser die erste vorbestimmte Schwelle (Ipc) für eine vorbestimmte Zeit (t4) überschreitet, Senden eines Alarmsignals für eine Phase-zu-Phase-Kurzschlussbedingung;
- Vergleichen des ausgewählten Signals, das den höchsten Wert der Quadrate der Quadratmittelwerte (I_{RMS}²) oder der Quadrate der Spitzenwerte (Ip²) anzeigt, mit einem zweiten vorbestimmten Schwellwert (ILR), wenn, dieser die zweiten Schwelle (ILR) für eine fünfte vorbestimmte Zeit (t5) überschreitet, Senden eines Alarmsignals für eine blockierte Rotorbedingung;
- Vergleichen der Signale, die die Motortemperaturen anzeigen, mit einem dritten vorbestimmten Schwellwert (Tsg1), und, wenn die dritte vorbestimmte Schwelle (Tsg1) überschritten wird, Senden eines Alarmsignals für eine thermische Überlastbedingung.

19. Verfahren für den Schutz eines Elektromotors (300) nach Anspruch 16, **dadurch gekennzeichnet, dass** der Schritt c) beinhaltet:
- Senden eines Steuersignals, das einen selektiven Betrieb des Leistungsschutzschalters (202) oder des Kontaktgebers (203) bewirkt;
- Prüfen in vorbestimmten Intervallen, dass eine Null-Zuführstrombedingung vorliegt, und, wenn diese Bedingung nicht erfüllt ist, Senden eines weiteren Befehlssignals an den Leistungsschutzschalter (202).

20. Verfahren für den Schutz eines Elektromotors (300) nach Anspruch 16, **dadurch gekennzeichnet, dass** während einer anfänglichen Motor-Inbetriebnahme, ein Übergangsvorgang folgende Schritte beinhaltet, die bestehen aus:
- Sperren der blockierten Rotorschutzfunktion für eine Zeit tx;
- Zuordnen von zwei Schwellwerten Is1, Is2, wobei Is2 > Is1, und zwei entsprechenden Betriebszeiten t7, t7', wobei t7 > t7', zur Phase-zu-Phase-Kurzschluss-Schutzfunktion;
- erneutes Einrichten der Normalbetriebsbedingung nach eine Zeit tx, wobei die Zeit tx gleich der für einen Betrieb des Schutzsystems im Fall eines Alarms aufgrund einer Bedingung einer thermischen Überlast des Motors eingestellt wird.

## Revendications

1. Dispositif (100) de protection d'un moteur électrique (300) connecté à une ligne d'alimentation électrique (200), ladite ligne (200) étant munie de capteurs (201) pour détecter les courants alimentant le moteur (300) et d'au moins un coupe-circuit (202) et d'un contacteur (203), **caractérisé en ce qu'**il comprend :
- des moyens de traitement (101) qui reçoivent des signaux analogiques indiquant les courants d'alimentation de moteur provenant desdits capteurs (201) et délivrent des signaux numériques correspondants à des moyens de comparaison (102), lesdits moyens de comparaison comparant les signaux numériques reçus à des valeurs de seuil prédéterminées, dans lequel les moyens de traitement (101) comprennent des moyens de mise en forme (4) qui mettent en forme lesdits signaux analogiques reçus en entrée et les envoient à des moyens convertisseurs (5) qui les convertissent en signaux numériques correspondants, et comprennent des premiers moyens de calcul (6) qui reçoivent lesdits signaux numériques des moyens convertisseurs (5) et délivrent des signaux indiquant les carrés de la valeur efficace (IRMS²) à un premier dispositif de sélection (8), à des premiers moyens de comparaison (10), à des deuxièmes moyens de comparaison (11) et à des troisièmes moyens de comparaison (33),
dans lequel lesdits premiers moyens de comparaison (10) comparent lesdits signaux indiquant les carrés des valeurs efficaces (IRMS²) à une première valeur de seuil prédéterminée (I_{pf}), et, si l'une desdites valeurs est inférieure audit premier seuil pendant un premier temps prédéterminé (t₁), envoient un signal d'alarme pour une perte de phase(s) à une unité logique de contrôle et de commande (103),
dans lequel lesdits deuxièmes moyens de comparaison (11) comparent lesdits signaux indiquant les carrés des valeurs efficaces (IRMS²) à une deuxième valeur de seuil prédéterminée (I_{ac}), et, si lesdites valeurs sont toutes simultanément au-dessous de ce deuxième seuil pendant un deuxième intervalle de temps prédéterminé (t₂), envoient un signal d'alarme pour une condition d'absence de charge à l'unité logique de contrôle et de commande (103), et
dans lequel lesdits troisièmes moyens de comparaison (33) comparent lesdits signaux indiquant les carrés de la valeur efficace (IRMS²) à une troisième valeur de seuil prédéterminée (I_{cc}), et, s'ils sont supérieurs à ce troisième seuil pendant un troisième temps prédéterminé (t₃), envoient un signal d'alarme pour un court-circuit à la terre à l'unité logique de contrôle et de commande (103),
- l'unité logique de contrôle et de commande (103) qui reçoit un signal d'alarme indiquant un défaillance provenant des moyens de comparaison et délivre un signal de commande correspondant provoquant sélectivement le fonctionnement du coupe-circuit (202) ou du contacteur (203) en fonction du type de défaillance qui s'est produite.

2. Dispositif (100) de protection d'un moteur électrique (300), selon la revendication 1, **caractérisé en ce que** des moyens de traitement (101) comprennent des deuxièmes moyens de calcul (7) qui reçoivent lesdits signaux numériques des moyens convertisseurs (5) et fournissent des signaux indiquant les carrés des valeurs de crête (Iₚ²) des courants d'alimentation de moteur à des moyens de sélection et de compensation (9).

3. Dispositif (100) de protection d'un moteur électrique (300), selon la revendication 2, **caractérisé en ce que** les moyens de sélection et de compensation (9) compensent les signaux indiquant les carrés des valeurs de crête (Iₚ²) des courants d'alimentation et délivrent un signal indiquant la plus haute valeur des carrés des valeurs de crête (Iₚ²) à des deuxièmes moyens de sélection (12) et à des quatrièmes moyens de comparaison (15).

4. Dispositif (100) de protection d'un moteur électrique (300), selon la revendication 3, **caractérisé en ce que** lesdits quatrièmes moyens de comparaison (15) comparent ledit signal, indiquant la plus haute valeur des carrés des valeurs de crête (Iₚ²), à une valeur de seuil prédéterminée (I_{pc}), et, s'il est supérieur au seuil prédéterminé (I_{pc}) pendant un temps prédéterminé (t₄), envoient un signal d'alarme pour une condition de court-circuit entre phases à l'unité logique de contrôle et de commande (103).

5. Dispositif (100) de protection d'un moteur électrique (300), selon la revendication 1, **caractérisé en ce que** les premiers moyens de sélection (8) sélectionnent le signal indiquant la plus haute valeur des carrés des valeurs efficaces (I_{RMS}²)² et l'envoient auxdits deuxièmes moyens de sélection (12).

6. Dispositif (100) de protection d'un moteur électrique (300), selon la revendication 5, **caractérisé en ce que** les deuxièmes moyens de sélection (12) envoient le signal indiquant la plus haute valeur des carrés des valeurs efficaces (I_{RMS}²)² à des moyens de calcul programmables (13) et à des cinquièmes moyens de comparaison (14) lorsque les carrés des valeurs efficaces (I_{RMS}²)² < Iₗᵢₘ, Iₗᵢₘ étant une valeur de limite prédéterminée, ou le signal indiquant la plus haute valeur des carrés des valeurs de crête (Iₚ²) lorsque les carrés des valeurs efficaces (I_{RMS}²)² > Iₗᵢₘ.

7. Dispositif (100) de protection d'un moteur électrique (300), selon la revendication 6, **caractérisé en ce que** lesdits cinquièmes moyens de comparaison (14) comparent le signal sélectionné, indiquant la plus haute valeur des carrés des valeurs efficaces (I_{RMS}²)² ou des carrés des valeurs de crête (Iₚ²), à une valeur de seuil prédéterminée (I_{LR}), et, lorsqu'il est supérieur au seuil (I_{LR}) pendant un temps prédéterminé (15), envoient un signal d'alarme pour un moteur bloqué à l'unité logique de contrôle et de commande (103).

8. Dispositif (100) de protection d'un moteur électrique (300), selon la revendication 6, **caractérisé en ce que** des moyens de calcul programmables (13) calculent des valeurs indiquant les températures de moteur d'après le signal sélectionné indiquant la plus haute valeur des carrés des valeurs de crête (Iₚ²) ou des carrés des valeurs efficaces (I_{RMS}²)² et délivrent des signaux correspondant auxdites valeurs indiquant les températures de moteur à des sixièmes moyens de comparaison (21).

9. Dispositif (100) de protection d'un moteur électrique (300), selon la revendication 8, **caractérisé en ce que** lesdits moyens de comparaison (21) comparent lesdits signaux, indiquant des températures de moteur, à une valeur de seuil prédéterminée (T_{sg1}), et s'ils sont supérieurs audit seuil prédéterminé (T_{sg1}), envoient un signal d'alarme pour une condition de surcharge thermique à l'unité logique de contrôle et de commande (103).

10. Dispositif (100) de protection d'un moteur électrique (300), selon l'une quelconque ou plusieurs des revendications précédentes, **caractérisé en ce qu'**il comprend un capteur de température de moteur qui détecte la température de moteur, et, si elle dépasse un seuil prédéterminé, envoie un signal d'alarme pour une température excessive à l'unité logique de contrôle et de commande (103).

11. Dispositif (100) de protection d'un moteur électrique (300), selon l'une quelconque ou plusieurs des revendications précédentes, **caractérisé en ce que** l'unité logique de contrôle et de commande (103) comprend des moyens de sélection et de commande (71) qui reçoivent un signal d'alarme indiquant une défaillance provenant des moyens de comparaison (10) et fournissent un signal de commande correspondant (50) qui provoque des fonctionnements sélectifs du coupe-circuit (202) ou du contacteur (203), ledit signal de commande (500) étant également fourni à des moyens de contrôle (72).

12. Dispositif (100) de protection d'un moteur électrique (300), selon la revendication 11, **caractérisé en ce que** lesdits moyens de contrôle (72) vérifient une condition de courant d'alimentation nul à des intervalles prédéterminés, et si cette condition n'est pas satisfaite, envoient d'autres signaux de commande (501) au coupe-circuit (202).

13. Dispositif (100) de protection d'un moteur électrique (300), selon l'une quelconque ou plusieurs des revendications précédentes, **caractérisé en ce que**ion dans une phase initiale de démarrage de moteur, l'unité logique de contrôle et de commande (103) désactive les moyens de comparaison (14) pendant un intervalle de temps prédéterminé tₓ, attribue deux valeurs de seuil de courant de crête Iₛ₁, Iₛ₂, où Iₛ₂ > Iₛ₁, et deux temps de fonctionnement correspondants t₇ et t₇', où t₇' > t₇, à des moyens de protection (15), en réinitialisant les valeurs de seuil initiales après le temps tₓ, ledit temps tₓ étant égal à celui réglé pour le fonctionnement du dispositif (100) en présence d'une alarme due à une condition de surcharge thermique dans le moteur (300).

14. Dispositif (100) de protection d'un moteur électrique (300), selon l'une quelconque ou plusieurs des revendications précédentes, **caractérisé en ce qu'**il comprend une unité d'alimentation électrique (19) apte à fournir la puissance électrique nécessaire au fonctionnement du dispositif pendant des temps où l'alimentation du moteur est coupée, ladite unité d'alimentation électrique comprenant au moins un condensateur.

15. Dispositif (100) de protection d'un moteur électrique (300), selon l'une quelconque ou plusieurs des revendications précédentes, **caractérisé en ce qu'**il peut être connecté à un bus de terrain pour obtenir des mesures du courant d'alimentation de moteur et des informations concernant le type de défaillance qui se produit.

16. Procédé de protection d'un moteur électrique (300) connecté à une ligne d'alimentation électrique (200), ladite ligne (200) étant munie de capteurs (201) pour détecter les courants alimentant le moteur (300) et au moins d'un coupe-circuit (202) et d'un contacteur (203), **caractérisé en ce qu'**il comprend les étapes suivantes consistant à :
a) acquérir des signaux analogiques indiquant le courant d'alimentation de moteur et calculer des signaux numériques correspondant auxdits signaux analogiques, ladite étape a) comprenant les étapes consistant à :
- mettre en forme les signaux analogiques reçus en entrée et les convertir en signaux numériques correspondants ;
- calculer des signaux numériques indiquant les carrés des valeurs efficaces (I_{RMS}²) et les carrés des valeurs de crête (Iₚ²) des courants d'alimentation de moteur ;
b) comparer lesdits signaux numériques à des valeurs de seuil prédéterminées, et, si au moins l'une des valeurs de seuil n'est pas satisfaite, envoyer un signal d'alarme indiquant une défaillance à une unité logique d'ouverture (103), ladite étape b) comprenant les étapes consistant à :
- comparer lesdits signaux numériques indiquant les carrés des valeurs efficaces (I_{RMS}²) à une première valeur de seuil prédéterminée (I_{pf}), et, si l'une desdites valeurs est inférieure audit seuil (I_{pf}) pendant un premier temps prédéterminé (t₁), envoyer un signal d'alarme pour une perte de phase(s) ;
- comparer lesdits signaux numériques indiquant les carrés des valeurs efficaces (I_{RMS}²) à une deuxième valeur de seuil prédéterminée (I_{ac}), et, si ces valeurs sont toutes simultanément au-dessous dudit seuil (I_{ac}) pendant un deuxième temps prédéterminé (t₂), envoyer un signal d'alarme pour une condition d'absence de charge ;
- comparer lesdits signaux numériques indiquant les carrés des valeurs efficaces (I_{RMS}²) à une troisième valeur de seuil prédéterminée (I_{cc}), et, s'ils sont supérieurs audit seuil (I_{cc}) pendant un troisième temps prédéterminé (t₃), envoyer un signal d'alarme pour une condition de court-circuit à la terre ;
c) envoyer un signal de commande qui provoque sélectivement le fonctionnement du coupe-circuit (202) ou du contacteur (203) en fonction du type de défaillance qui s'est produite.

17. Procédé de protection d'un moteur électrique (300) selon la revendication 16, **caractérisé en ce que** ladite étape a) comprend également les étapes consistant à :
- sélectionner un signal indiquant la plus haute valeur des carrés des valeurs efficaces (I_{RMS}²) ;
- compenser les signaux indiquant les carrés des valeurs de crête (Iₚ²) et sélectionner le signal indiquant la plus haute valeur des carrés des valeurs de crête (Iₚ²) ;
- sélectionner le signal indiquant la plus haute valeur des carrés des valeurs efficaces (I_{RMS}²) lorsque les carrés des valeurs efficaces (I_{RMS}²) < Iₗᵢₘ, Iₗᵢₘ étant une valeur de limite prédéfinie, ou le signal indiquant la plus haute valeur des carrés des valeurs de crête (Iₚ²) lorsque les carrés des valeurs efficaces (I_{RMS}²) > Iₗᵢₘ ;
- calculer des signaux indiquant des valeurs des températures de moteur d'après le signal sélectionné indiquant la plus haute valeur des carrés des valeurs efficaces (I_{RMS}²) ou des carrés des valeurs de crête (Iₚ²).

18. Procédé de protection d'un moteur électrique (300), selon la revendication 17, **caractérisé en ce que** ladite étape b) comprend également les étapes consistant à :
- comparer ledit signal sélectionné, indiquant la plus haute valeur des carrés des valeurs de crête (Iₚ²), à une première valeur de seuil prédéterminée (I_{pc}), et, s'il est supérieur au premier seuil prédéterminé (I_{pc}) pendant un quatrième temps prédéterminé (t₄), envoyer un signal d'alarme pour une condition de court-circuit entre phases ;
- comparer le signal sélectionné, indiquant la plus haute valeur des carrés des valeurs efficaces (I_{RMS}²) ou des carrés des valeurs de crête (Iₚ²), à une deuxième valeur de seuil prédéterminée (I_{LR}), et lorsqu'il est supérieur au deuxième seuil prédéterminé (I_{LR}) pendant un cinquième temps prédéterminé (t₅), envoyer un signal d'alarme pour une condition de rotor bloqué ;
- comparer lesdits signaux, indiquant les températures de moteur, à une troisième valeur de seuil prédéterminé (T_{sg1}), et, s'il est supérieur au troisième seuil prédéterminé (T_{sg1}), envoyer un signal d'alarme pour une condition de surcharge thermique.

19. Procédé de protection d'un moteur électrique (300), selon la revendication 16, **caractérisé en ce que** ladite étape c) comprend les étapes consistant à :
- envoyer un signal de contrôle qui provoque un fonctionnement sélectif du coupe-circuit (202) ou du contacteur (203) ;
- vérifier, à intervalles prédéterminés, qu'il existe une condition de courant d'alimentation nul, et lorsque cette condition n'est pas satisfaite, envoyer un autre signal de commande au coupe-circuit (202).

20. Procédé de protection d'un moteur électrique (300), selon la revendication 16, **caractérisé en ce que,** pendant un transitoire de démarrage de moteur initial, il comprend les étapes consistant à :
- désactiver la fonction de protection de rotor bloqué pendant un temps tₓ ;
- attribuer deux valeurs de seuil Iₛ₁, Iₛ₂, où Iₛ₂ > Iₛ₁ et deux temps de fonctionnement correspondants t₇, t₇', où t₇ > t₇' à la fonction de protection de court-circuit entre phases ;
- rétablir des conditions de fonctionnement normales après un temps tₓ, ledit temps tₓ étant égal à celui réglé pour le fonctionnement du système de protection dans le cas d'une alarme due à une condition de surcharge thermique du moteur.
